(19) **Europäisches Patentamt / European Patent Office / Office européen des brevets**

(11) **EP 1 788 728 A1**

(12) **EUROPEAN PATENT APPLICATION**

(43) Date of publication:
**23.05.2007 Bulletin 2007/21**

(51) Int Cl.:
**H04B 10/17** (2006.01)    **H01S 3/30** (2006.01)

(21) Application number: **05292459.4**

(22) Date of filing: **18.11.2005**

<table>
<tr><td>(84) Designated Contracting States:<br><b>AT BE BG CH CY CZ DE DK EE ES FI FR GB GR HU IE IS IT LI LT LU LV MC NL PL PT RO SE SI SK TR</b><br>Designated Extension States:<br><b>AL BA HR MK YU</b><br><br>(71) Applicant: <b>Alcatel Lucent</b><br><b>75008 Paris (FR)</b></td><td>(72) Inventor: <b>Martinelli, Catherine</b><br><b>91120 Palaiseau (FR)</b><br><br>(74) Representative: <b>Kohler Schmid Möbus</b><br><b>Patentanwälte</b><br><b>Ruppmannstrasse 27</b><br><b>70565 Stuttgart (DE)</b></td></tr>
</table>

(54) **Raman amplifier and optical transmission system**

(57)    A Raman amplifier for a use in optical transmission systems. The Raman amplifier comprises a Raman active optical fiber and a Raman pump in operative connection with said optical fiber. The Raman pump further comprises a plurality of pairs of pump light sources which emit polarized pump light. Each pair of pump light sources generates a pair of mutually orthogonal pump fields (E1a-c, E2a-c) with respective central frequencies ($\nu_{1a-c}$, $\nu_{2a-c}$). The Raman pump also comprises a pump field combiner in operative connection with the pump light sources. The pump field combiner is adapted to couple each of the plurality of pairs of pump fields (E1a-c, E2a-c) at mutually orthogonal directions of polarization into said optical fiber. It is proposed that the respective central frequencies ($\nu_{1a-c}$, $\nu_{2a-c}$) of the pump fields of at least one, preferably each pair of mutually orthogonal pump fields (E1a-c, E2a-c) are different from each other and exhibit a frequency shift ($\Delta\nu$) below 1.8 THz. This feature avoids polarization dependent gain (PDG) on channels of the optical transmission system which may arise from the fact that some channels of the optical transmission system effectively receive a Raman gain from only one of the polarized pump fields if the frequency shift between said central frequencies ($\nu_{1a-c}$, $\nu_{2a-c}$) exceeds the proposed specification.

Fig. 2

EP 1 788 728 A1

**Description**

Background of the invention

The invention relates to a Raman amplifier comprising a Raman active optical fiber and a Raman pump in operative connection with said optical fiber, the Raman pump comprising: a plurality of pairs of pump light sources emitting polarized pump light, each generating a pair of mutually orthogonal pump fields with respective central frequencies, and a pump field combiner in operative connection with the pump light sources and adapted to couple each of the plurality of pairs of pump fields at mutually orthogonal directions of polarization into said optical fiber.

The invention also relates to an optical transmission system, comprising: a transmitter unit for transmitting an optical signal, a receiver unit for receiving the optical signal from the transmitter unit, and an optical transmission link for propagating the optical signal between the transmitter unit and the receiver unit.

The invention further relates to a method for amplifying an optical signal in a Raman active optical fiber, comprising the steps of: (a) generating at least one pair of pump fields with mutually orthogonal directions of polarization, (b) propagating said at least one pair of pump fields through said Raman active optical fiber in a propagation direction of the optical signal to be amplified.

For amplifying optical signals in optical transmission systems, widespread use has been made of stimulated Raman amplification, which is a non-linear optical process in which an intense pump wave is injected into a Raman active optical fiber propagating one or more optical signals to be amplified. In this context, a particular amplification technique is referred to as Raman co-pumping, wherein the optical signal to be amplified and the Raman pump wave (s) propagate in the same direction on an optical transmission link, e.g. an optical transmission fiber, connecting the transmitter unit and the receiver unit in an optical transmission system.

In order to achieve efficient Raman co-pumping, pump light sources -- hereinafter also referred to as "pumps" - with low Relative Intensity Noise (RIN) have to be employed. Pump light sources with acceptable RIN are usually composed of semiconductor diodes. These diodes emit polarized light. In order to obviate the problem of polarization dependent gain (PDG), a widely used method includes depolarizing the Raman pump, which comprises individual pump light sources, by means of using a plurality of diodes, which operate at the same optical wavelength, and coupling their respective emissions with a polarization beam combiner (PBC). This approach, however, suffers from the following disadvantage: When the two orthogonal pump light emissions - hereinafter also referred to as "pump fields" - overlap in the spectral domain, intensity noise coming from the product of the orthogonal pump fields is induced on the Raman amplified optical signal.

Experimentally, with Fiber Bragg Grating (FBG) stabilized diodes, a 10 dB degradation due to this overlap has been observed.

Prior art document US 6,384,963 discloses a Raman amplifier for to achieve Raman co-pumping, in which said overlap between the orthogonal pump fields is avoided by separating the spectra of the pump diodes with respect to their emission wavelengths. As can be gathered from Fig. 7 of said prior art document, the two diode spectra are separated by a corresponding frequency shift $\Delta v$ = 2.1 THz. As a consequence of this, one of the pumps produces Raman gain on some channels of a wavelength division multiplex (WDM) transmission system, while the other pump produces Raman gain on other channels of said system. Therefore, most of the channels in the system mainly receive their Raman gain from only one of the two pumps, which are mutually orthogonally polarized, such that the optical transmission system will present polarization dependent gain (PDG).

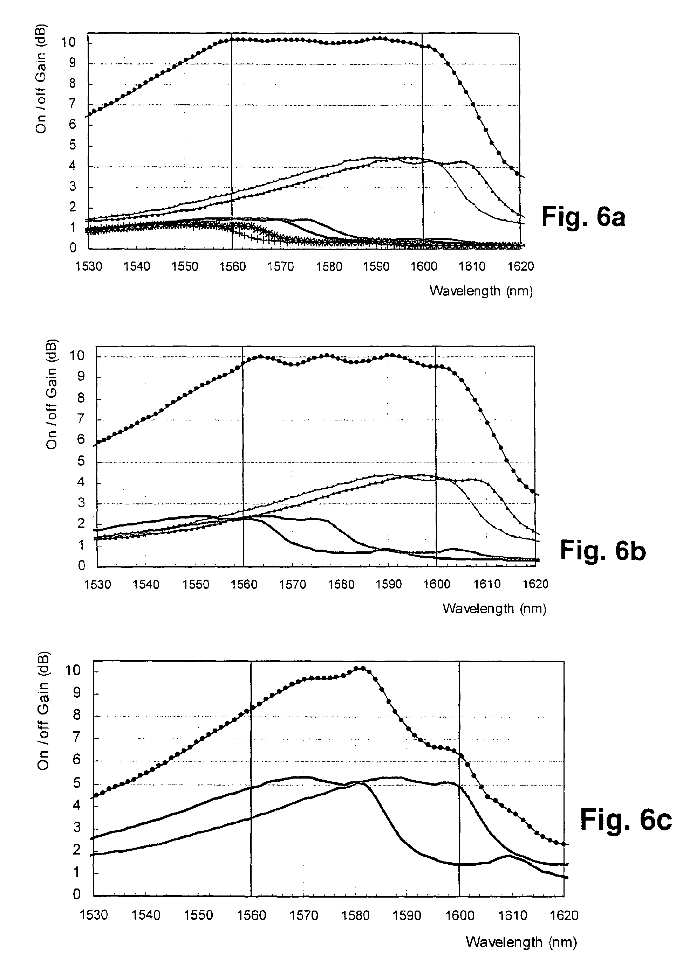

For instance, in an optical transmission system comprising a Raman amplifier with two orthogonal pumps having the same power, being separated by $\Delta v$ = 2.1 THz, and emitting light at 1467.8 and 1483 nm, respectively, an on/off Raman gain over a range of wavelengths from 1510 nm to 1620 nm is shown in **Fig. 6c**, corresponding to an (extended) wavelength range of wavelength channels of a WDM system, the optical signals being transmitted between 1560 and 1600 nm. The upper (dotted) curve in Fig. 6c shows the total gain imparted on the optical signals. The two lower curves in Fig. 6c show the gain produced by two individual pumps, the curve having an on/off gain with a maximum at a lower / higher frequency corresponding to the pump with a center wavelength at 1467.8 / 1483 nm, respectively.

The channel at 1590 nm receives a total gain of 7.5 dB. Among this total gain, 2.3 dB comes from the pump at 1467.8 nm and 5.2 dB gain comes from the pump at 1483 nm. The 1483-nm pump brings 2.9 dB more gain than the 1467.8-nm pump. Consequently, this share of 2.9-dB gain is provided by the polarized pump field at 1483 nm alone. In co-pumped schemes, PDG can be as high as 60%, thus the channel at 1590 nm will suffer 1.8 dB PDG.

Object of the invention

It is the object of the present invention to provide a Raman amplifier which can be employed in optical transmission systems using co-pumped Raman amplification, which obviates the above-mentioned disadvantages and which therefore does not induce polarization dependent gain (PDG) on channels of the optical transmission system.

It is further an object of the present invention to provide an optical transmission system, individual channels of which do not suffer polarization dependent gain (PDG).

It is another object of the present invention to provide a method for amplifying an optical signal in a Raman active optical fiber, comprising the steps of: (a) generating at least one pair of pump fields with mutually orthogonal directions of polarization, and (b) propagating said at least one pair of pump fields through said Raman active optical fiber in a propagation direction of the optical signal to be amplified.

Description of the invention

According to the first aspect of the present invention the object is achieved by means of a Raman amplifier of the above-mentioned type, wherein the respective central frequencies of the pump fields of at least one, preferably each pair of mutually orthogonal pump fields are different from each other and exhibit a frequency shift below 1.8 THz.

According to the second aspect of the present invention the object is also achieved by providing an optical transmission system of the above-mentioned type, comprising a Raman amplifier according to said first aspect of the present invention, said Raman amplifier being in operative connection with the optical transmission link for amplifying the optical signal.

According to the third aspect of the present invention, the object is achieved by a method of the above-mentioned kind wherein the central frequencies of the pump fields of said at least one pair of pump fields are selected to be different from each other and to exhibit a frequency shift of below 1.8 THz.

As a general idea, the present invention proposes to specify a maximum frequency shift, i.e., $\Delta \nu \leq 1.8$ THz, between the central optical frequencies of the polarization combined pump fields for to minimize polarization dependent gain (PDG) in optical transmission systems. In a preferred embodiment of the Raman amplifier in accordance with the present invention the frequency shift $\Delta \nu$ between the respective central frequencies is lower than 0.8 THz. The "pairs of pump fields" to which the invention relates may be defined as the couples of polarized pump fields that are mutually orthogonal and that are the closest to each other in the spectral domain (compared to all other possible pairs). The polarized pump fields of different pairs are not necessarily aligned along the same state of polarization.

Advantageously, in accordance with a further embodiment of the present invention, a spectral overlap between the orthogonal pump fields in the at least one, preferably each pair of pump fields is limited according to the relation:

$$(\nu_{C2} - \Delta \nu_2' / 2) - (\nu_{C1} + \Delta \nu_1' / 2) > 0 \qquad \text{(Eq. 1)}$$

wherein $\Delta \nu_{1,2'}$ ($= \Delta \nu_{i'}$) is a frequency bandwidth of the pump fields and wherein $\nu_{C1,C2}$ is the central frequency of the respective pump field such that:

$$\int_{\nu_c - \Delta \nu_i'/2}^{\nu_c + \Delta \nu_i'/2} P(\nu)\,d\nu = A \cdot \int_{-\infty}^{+\infty} P(\nu)\,d\nu \qquad \text{(Eq. 2)}$$

for a given pump field, wherein $P(\nu)$ is the optical power spectrum of the pump field and A is a constant, $0.5 < A < 0.9$, preferably $A = 0.8$. In this way excessive overlap between pump fields is avoided which results in an effective reduction of intensity noise on the Raman amplified signal, as stated above.

In another embodiment in accordance with the present invention, the respective central frequencies of only one pair of pump fields with the lowest central frequencies of pump fields of said plurality of pairs of pump fields exhibit a frequency shift below 1.8 THz. The share of gain provided to the signal by one polarized pump field alone should be limited, for instance to 2 or 3 dB. Due to the specific shape of the Raman gain curve, the pump field (or the pair of orthogonal pump fields) with the highest wavelength (corresponding to the lowest central frequency) almost provide all the gain to the signals of higher wavelengths. It is thus a priority to specify the maximum frequency shift between the orthogonal pump fields having the highest wavelengths.

In a further preferred embodiment, the plurality of pairs of pump light sources are set up for emitting the polarized pump light through said Raman active optical fiber in a propagation direction of an optical signal to be amplified, thus performing Raman co-pumping.

In a preferred further embodiment of the Raman amplifier in accordance with the present invention, the pump field combiner comprises at least one of a polarization beam combiner, a wavelength multiplexer, and an optical coupler.

In this way, various ways of technical realization of the Raman amplifier in accordance with the present invention are available for a person skilled in the art. In a general way, for pump depolarization, a plurality, i.e. at least two, polarized pump fields are coupled together, such that they enter the Raman active optical fiber (discrete or distributed Raman amplifier) with orthogonal states of polarization.

In order to efficiently limit a width of the pump fields, which is an important feature with respect to avoiding pump field overlap, in a preferred embodiment of the present invention at least one of the pump light sources is a Fiber Bragg Grating (FBG) diode, which display a spectral width of only 2 to 4 nm (250 - 500 GHz) and which are wavelength stabilized. Alternatively or additionally, at least one of the pump light sources can be devised as an inner-grating module, which have the additional advantage of presenting only low RIN.

When using FBG stabilized diodes, polarization maintaining fibers should not be used to depolarize the output field of the respective diodes, as the inventors have found out that such a depolarization of the diode field induces additional intensity noise on the Raman amplified signal.

Further advantages and characteristics of the present invention can be gathered from the following description of preferred embodiments with reference to the enclosed drawings. Features mentioned above as well as below can be used in accordance with the invention either individually or in conjunction. The embodiments mentioned are not to be understood as an exhaustive enumeration but rather as examples with regard to the underlying concept of the present invention.

Drawings

Fig. 1          is a schematic block diagram of an optical transmission system in accordance with the present invention comprising a Raman amplifier in accordance with another aspect of the present invention with a pump field combiner;

Fig. 1a, b      are schematic block diagrams embodiments of the pump field combiner of Fig. 1,

Fig. 2          is a schematic illustration of pumping frequencies used in a Raman pump composed of six pumping light sources in accordance with the present invention;

Fig. 3          is a schematic illustration of pumping frequencies used in a Raman pump composed of four pumping light sources in accordance with the present invention;

Fig. 4          is an optical power spectrum of a Raman pump field;

Figs 5a, b      are examples of profitable frequency shifts between pump fields in accordance with the present invention;

Figs 6a, b      are on / off Raman gains produced by pump fields shifted in accordance with the present invention, and

Fig. 6c         is an example of on / off Raman gains produced by pump fields shifted according to prior art.

The following detailed description of the invention refers to the accompanying drawings. The same reference numerals may be used in different drawings to identify the same or similar elements.

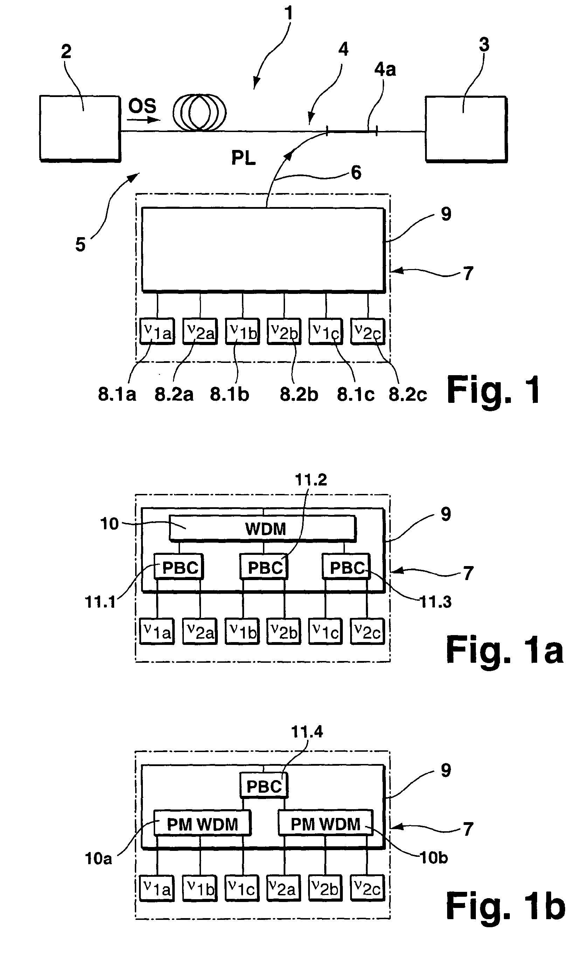

**Fig. 1** is a schematic block diagram of an optical transmission system **1** in accordance with the present invention. The optical transmission system 1 comprises a transmitter unit **2** and a receiver unit **3** which are connected by means of a transmission link **4**, e.g. an optical transmission fiber, for transmission of optical signals **OS** from the transmitter unit 2 to the receiver unit 3. In the embodiment shown in Fig. 1, a section **4a** of the optical transmission link fiber 4 is devised as a Raman active optical fiber.

The optical transmission system 1 further comprises a Raman amplifier **5** in operative connection with the optical transmission link 4, 4a. The Raman amplifier 5 comprises an additional optical fiber segment **6** in connection with the optical transmission link fiber 4, 4a of the optical transmission system 1. The Raman amplifier 5 further comprises a Raman pump **7** depicted with dashed lines, which is connected with the optical fiber 6. The Raman pump 7 includes three pairs of polarized pump light sources {**8.1a, 8.2a**}, {**8.1b, 8.2b**}, {**8.1c, 8.2c**} which emit respective polarized pump light at different pumping optical frequencies $v_{1a-c}$, $v_{2a-c}$. In accordance with the present invention, said pump light sources 8.1a-c, 8.2a-c are preferably devised as semiconductor diodes, e.g. Fiber Bragg Grating (FBG) stabilized diodes or inner-grating modules.

The pump light sources 8.1 a-c, 8.2a-c are operatively connected by means of a pump field combiner **9** adapted to couple the generally polarized pump light **PL** of pump light sources 8.1 a-c, 8.2a-c, i.e. of a plurality of pump fields, into the optical fiber 6, 4, 4a in order to achieve Raman amplification of the optical signals OS propagated on the optical transmission link 4, 4a between the transmitter unit 2 and the receiver unit 3. In the following, two possible implementations of the pump field combiner will be described in greater detail with reference to **Figs. 1a, b.**

Fig. 1 a shows a pump field combiner 9 which comprises three polarization beam combiners (PBCs) **11.1** to **11.3**, each receiving the pump light from a respective pair of pump light sources {8.1 a, 8.2a}, {8.1b, 8.2b}, {8.1c, 8.2c} transmitted through polarization maintaining fibers (represented by thick lines). The pump light of the first pump light source 8.1a-c of a respective pair has a direction of polarization which is orthogonal to the direction of polarization of the second respective pump light source 8.2a-c of the same pair. The output light of the PBCs 11.1 to 11.3 is provided as an input to a wavelength division multiplexer **10** thus forming a common pump signal which is provided to the optical fiber segment 6 shown in Fig. 1. It is not necessary to control the direction of polarization of the light from different pairs of pump light sources {8.1a, 8.2a}, {8.1b, 8.2b}, {8.1c, 8.2c} with respect to each other, such that no polarization maintaining fibers are necessary for connecting the PBCs 11.1 to 11.3 and the WDM 10.

In an alternative implementation of the pump field combiner 9 shown in Fig. 1b, two polarization maintaining wavelength division multiplexers (PM WDM) **10a, 10b** are provided. The first PM WDM 10a collects the polarized light of the first pump light sources 8.1 a-c of each pair of pump light sources {8.1a, 8.2a}, {8.1b, 8.2b}, {8.1c, 8.2c}, the second PM WDM 10b collects the polarized light of the second pump light sources 8.2a-c of each pair, having a polarization state that is orthogonal to the polarization state of the pump light of the first pump light sources 8.1a-c. In this case, the polarization directions of the first pump light sources 8.1 a-c and the second pump light sources 8.2a-c, respectively, are aligned along the same state of polarization. A PBC 11.4 of the polarization field combiner 9 is connected to the outputs of the first and second PM WDM 10a, 10b via a polarization maintaining fiber and adapted to combine the mutually orthogonal polarization states to form a common pump signal.

Since according to Fig. 1, the Raman pump light PL and the optical signals OS propagate in a common direction (as indicated by the arrows in Fig. 1), this amplification technique is referred to as Raman co-pumping.

In the embodiment of Fig. 1, the Raman amplifier 5 is devised as a distributed Raman amplifier. However, as will be appreciated by a person skilled in the art, in accordance with the present invention the Raman active fiber section could be provided e.g. by a specific fiber of high Raman efficiency or a dispersion compensating fiber, thus forming a Raman amplifier of the discrete type.

In order to achieve efficient Raman co-pumping, a Raman pump 7 with low Relative Intensity Noise (RIN) has to be used. As stated before, pump units with an acceptable RIN generally comprise semiconductor diodes. These diodes emit polarized light. In order to avoid polarization dependent gain (PDG) and its negative effects on system performance, a widely used approach for effectively depolarizing the Raman pump has been to use diodes operating at a common wavelength and to couple the respective emissions with a polarization beam combiner, as shown at reference numerals 7, 9 in the above-described Fig. 1. As already stated above, this approach suffers from the disadvantage that due to the overlap of the orthogonal pump fields intensity noise coming from the product of the orthogonal field is induced on the Raman amplified signal, i.e. the optical signal OS in Fig. 1. When avoiding overlap between the orthogonal pump fields, however, a large number of channels in an optical transmission system 1 will effectively receive their respective Raman gain mainly from only one polarized Raman pump light source (e.g., pump light sources 8.1a, 8.2a in Fig. 1). This will result in an undesirable polarization dependent gain (PDG).

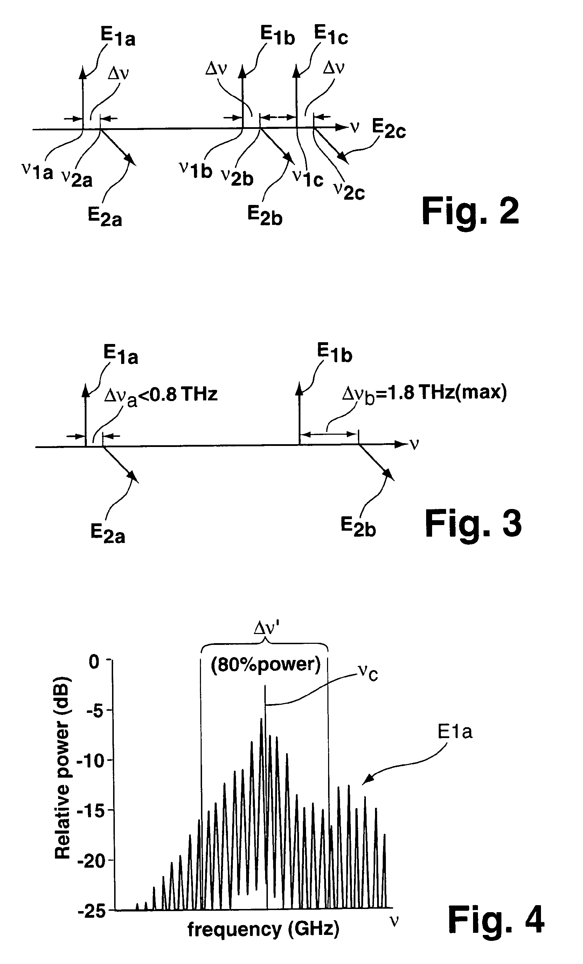

In this context, the present invention proposes a judicious choice of the overlap and / or the frequency shift between the combined pump fields of the Raman amplifier 5 in accordance with Fig. 1. This will now be explained with reference to appended Figs 2 to 6b.

**Fig. 2** is a schematic diagram of the optical frequency distribution of pump light sources of a Raman pump 7 (Fig. 1) composed of six diodes (pump light sources). The horizontal axis in Fig. 2 denotes an optical frequency, $v$, whereas the upwards and downwards pointed arrows **E1a-c, E2a-c** denote the emissions of the six individual pump light sources of Fig. 1. Physically speaking, the arrows E1a-c, E2a-c represent a field vector of the individual pump light sources (cf. reference numerals 8.1, 8.2 in Fig. 1). Thus, the corresponding emissions of the individual pump light sources can also be referred to as pump fields E1 a-c, E2a-c, i.e. a plurality of six pump fields. As can be seen by the directions of the arrows E1 a-c, E2a-c in Fig. 2, the pump fields of different pairs are separated into two groups E1a-c and E2a-c, respectively, the pump fields in each group being mutually orthogonal in polarization to the pump fields in the other group when coupled into the optical fiber 6, 4, 4a in Fig. 1. The frequency distribution of Fig. 2 may preferably be produced at the output of the Raman pump 7 using the design of the pump field combiner 9 shown in Fig. 1 b

Alternatively, when using the implementation of the pump field combiner 9 shown in Fig. 1a, the angle between the directions (field vectors) of the pump fields of different pairs of pump fields E1a-c, E2a-c are chosen arbitrarily, as it is sufficient that the pump fields in each individual pair are mutually orthogonal.

In addition to their orthogonality, the individual optical frequencies $v_{1a}$, $v_{1b}$, $v_{1c}$ of the first group of pump fields E1-c are shifted in frequency with respect to optical frequencies $v_{2a}$, $v_{2b}$, $v_{2c}$ in the other (orthogonal) group of pump fields E2a-c by an amount (frequency shift) $\Delta v$, as depicted in Fig. 2. In this context, the frequency shift $\Delta v$ is defined as

a difference in frequency which separates the emissions of pump light sources from one group E1a-c with respect to the emissions of neighboring (in terms of frequency) pump light sources from the other group E2a-c, thus effectively defining pairs of pump light sources or pump fields, e.g. E1 a/E2a or E1 b/E2b. Since the emission of an individual pump light source does generally not form a single narrow emission peak at the pumping wavelength or frequency, respectively, the individual arrows E1 a-c, E2a-c in Fig. 2 actually denote individual central optical frequencies of the individual emission spectra of every pump light source, as will become apparent in the following discussion of Fig. 4.

**Fig. 3** schematically illustrates another exemplary embodiment of the Raman amplifier 5 (Fig. 1) in accordance with the present invention, wherein the Raman pump 7 comprises four individual pump light sources (diodes) at optical frequencies $\nu_{1a}$, $\nu_{1b}$, $\nu_{2a}$, $\nu_{2b}$, which generate pump fields E1a,b; E2a,b with respective orthogonal polarization when coupled into the optical fiber 6, 4, 4a (Fig. 1). A major difference between the embodiments of Fig. 2 and Fig. 3 resides in the fact that in accordance with the embodiment of Fig. 3 pump field E1 a is shifted with respect to orthogonal pump field E2a by an amount $\Delta\nu_a$ which differs from the frequency shift between pump field E1b and pump field E2b, which are shifted by an amount $\Delta\nu_b$.

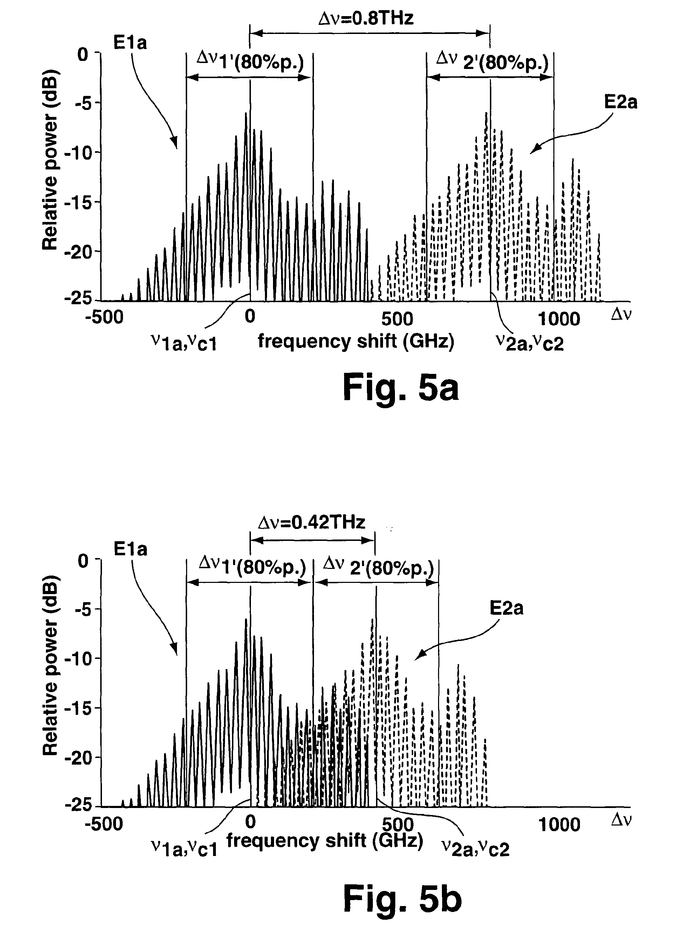

The inventive choice of the respective frequency shifts $\Delta\nu$, $\Delta\nu_a$, $\Delta\nu_b$ in Figs 2, 3 will now be explained with reference to Figs 4, 5a, 5b.

**Fig. 4** shows an optical power spectrum (dB scale) of a Raman pump field, e.g. pump field E1a (Figs 2, 3), from a single individual Raman pump light source, e.g. pump light source 8.1 a in Fig. 1. Depicted is the optical power spectrum $P(\nu)$ versus an optical frequency $\nu$ measured in Gigahertz (GHz). From the pump field E1a depicted in Fig. 4, a frequency bandwidth $\Delta\nu'$ may be selected which corresponds to 80% of the total optical power of the pump light, thus satisfying the following equation:

$$\int_{\nu_c - \Delta\nu'/2}^{\nu_c + \Delta\nu'/2} P(\nu)\,d\nu = 0.8 \cdot \int_{-\infty}^{+\infty} P(\nu)\,d\nu \,, \qquad\qquad \text{(Eq. 3)}$$

wherein $P(\nu)$ is the optical power spectrum of the pump field and $\nu_C$ is the center frequency of the Raman pump field.

In the simple case that the frequency spectrum of the pump light source has a symmetrical shape, the central frequency (i.e. pumping frequency) corresponds to the frequency of symmetry. However, in the case of a non-symmetrical shape of the frequency spectrum, the value of the central frequency may not be easy to find. In this case, Eq. 3 may be used as a definition for the central frequency: the frequency "around which" there is the most optical power density, thus solving Eq. 3 for the couple of values {$\Delta\nu'$, $\nu_c$} simultaneously, as will be described in the following.

Numerically, one may use a band-pass filter of width $\Delta\nu'$ and find the best central frequency $\nu_c$ for this filter to select as much power as possible. For each width $\Delta\nu'$ of this filter, the best central frequency $\nu_c$ is determined. Finally, one chooses the couple {$\Delta\nu'$, $\nu_c$} that respects Eq. 3. In this sense, $\Delta\nu'$ is the minimum frequency bandwidth such that there exists a central optical frequency $\nu_c$ that satisfies Eq. 3. As a remark, $\nu_c$ may not coincide with the frequency of the power peak, and also, it may depend on the choice of coefficient A.

As stated above, the central optical frequency $\nu_c$ can thus be determined as the center frequency of the frequency bandwidth $\Delta\nu'$ which constitutes the minimum bandwidth which satisfies Eq. 3. With a power spectrum of the pump light source which is almost symmetrical with respect to the pumping frequency as shown in Fig. 4, the central frequency $\nu_c$ essentially coincides with the pumping frequency, such that both frequencies are considered as equal in the following discussion.

In a more general way, Eq. 3 can be written as

$$\int_{\nu_c - \Delta\nu'/2}^{\nu_c + \Delta\nu'/2} P(\nu)\,d\nu = A \cdot \int_{-\infty}^{+\infty} P(\nu)\,d\nu \,, \qquad\qquad \text{(Eq. 4)}$$

wherein $A$ is a positive constant with $0.5 < A < 0.9$.

As stated before, when two orthogonal pump fields overlap, intensity noise coming from the product of these orthogonal fields is induced on the Raman amplified signal. Therefore, in accordance with an embodiment of the present invention, the spectral overlap of the pump fields is limited in accordance with the following relation:

$$(v_{C2}-\Delta v_2'/2)-(v_{C1}+\Delta v_1'/2) > 0 ,$$

wherein the definitions of Eq. 1 have been used for two pump fields (e.g., pump fields E1a, E2a in Figs 2, 3) with respective central frequencies $v_{C1}$ and $v_{C2}$ (with $v_{C2} > v_{C1}$) and with respective frequency bandwidths $\Delta v_1'$ and $\Delta v_{2'}$. This is illustrated in the following Figs 5a, b.

**Figs 5a, b** show the overlap of two pump fields, e.g. pump fields E1a, E2a in Figs 2, 3, by displaying a relative power measured in decibels (dB) versus frequency shift measured in Gigahertz (GHz). In accordance with Fig. 5a, the pump fields E1a, E2a are shifted by an amount of $\Delta v$ = 0.8 THz with respect to their central optical frequencies $v_{C1} = v_{1a}$, $v_{C2} = v_{2a}$, respectively, such that there is substantially no overlap between the two pump fields E1a, E2a. This is in accordance with the relation in Eq. 1 above.

In the embodiment of Fig. 5b the frequency shift $\Delta v$ amounts to only $\Delta v$= 0,42 THz, which is essentially the lower limit for the frequency shift $\Delta v$ before the two pump fields E1a, E2a excessively overlap in violation of the relation of Eq. 1. In this way, in accordance with the present invention the overlap of orthogonal pump fields is effectively limited, thus reducing intensity noise on the Raman amplified optical signal OS (Fig. 1). It has been experimentally verified that without the inventive feature of limiting pump field overlap a degradation of up to 10 dB can be observed.

Furthermore, and in accordance with the general idea of the present invention, a maximum wavelength / frequency shift between pairs of pump fields (E1a,/E2a and E1b/E2b, respectively, in Fig. 3) is specified in order to avoid polarization dependent gain (PDG). Therefore, in accordance with the present invention optical frequency shifts $\Delta_{vi}$ in pairs of pump fields are restricted to values $\Delta_{vi} \leq 1.8$ THz, preferably $\Delta_{vi} < 0.8$ THz. However, in order to avoid excessive pump field overlap, as stated above, a minimum frequency shift in pairs of pump fields is specified according to $\Delta v_i > 0.4$ THz. In this context, the term "pair of pump fields" denotes pump fields, i.e. emissions from two individual pump light sources (Fig. 1), which are sufficiently close in term of their respective optical emission frequencies $v_i$ such that they will effectively interact with respect to their influence on the amplified optical signal OS (Fig. 1). Referring again to Fig. 3, only pump fields E1a, E2a and pump fields E1b, E2b, respectively, are sufficiently close in terms of optical frequency $v_i$ to be regarded as pairs of pump fields to which the above Eq. 1 and the inventive specification with respect to the maximum wavelength / frequency shift apply.

**Figs 6a, b** show the effects of the invention with respect to the Raman gain on the optical signals OS propagated from the transmitting unit 2 to the receiver unit 3 in the optical transmission system 1 of Fig. 1 in a wavelength range between 1560 nm and 1600 nm. In both Figures, the on / off gain in decibel (dB) is depicted versus the optical wavelength measured in nanometers (nm). The upper (dotted) curve in Figs 6a, b shows the total gain imparted on the optical signals OS by means of the inventive Raman amplifier 5 (Fig. 1).

The six lower curves in Fig. 6a represent the gain produced by six individual pumps (pump fields), corresponding to the gain spectrum produced by pump fields chosen in accordance with Fig. 2. The pump light of the individual pumps is emitted at the center wavelengths of: 1446.3 nm, 1451.5 nm, 1457.9 nm, 1463.2 nm, 1486 nm, and 1491.3 nm, respectively. It can be gathered from Fig. 6a that the difference in on /off gain of the respective polarized pump fields over the critical wavelength range from 1560 nm to 1600 nm does not exceed 0.5 dB. Moreover, an overall flat total gain is obtained for this wavelength band.

In Fig. 6b, the on /off gain produced by four individual pump fields corresponding to the gain spectrum chosen in accordance with Fig. 3 is shown. The pump wavelengths are chosen in this case to be: 1451.5 nm, 1463.2 nm, 1486 nm, and 1491.3 nm for signals in a range between 1560 and 1600 nm. Though the pump fields at 1451.5 nm and 1463.2 nm are separated by 1.8 THz, the gain coming from the polarized pump field at 1463.2 nm alone is only 1.2 dB in the worst case (i.e. on the signal channel at 1575 nm).

As can be gathered from Fig. 6a, b, when a Raman pump comprises a plurality of pump light sources, the frequency shifts between the pump fields are usually chosen so as to achieve flat Raman gain over the signal transmission band. For this purpose, and due to the specific shape of the Raman gain curve, the pump fields of lower wavelengths (i.e. of higher optical frequencies) are separated by less than 1.8 THz, as separating them by more than 1.8 THz yields unwanted ripple on the total Raman gain spectrum.

Again, due to the specific shape of the Raman gain curve again, the pump field (or the pair of orthogonal pump fields) of highest wavelengths almost provide all the gain to the signals of higher wavelengths of the transmission band. (By contrast, the signal channels of lower wavelengths get their gain from low and high-wavelength pump fields together). Consequently, it is a priority to specify the limit of the maximum frequency shift between the orthogonal pump fields of higher wavelengths, leading to a frequency shift of 0.8 THz between the pump fields of higher wavelengths and a frequency shift of 1.8 THz between the pump fields with lower wavelength, as shown in Fig. 6b, still having a sufficiently flat gain profile and reduced PMD. In general, when using several pump fields, the frequency shift between the pump fields with lower wavelengths can therefore be chosen higher than that of the pump fields with higher wavelengths. In particular, the pair of pump fields having the highest wavelengths may have a frequency shift of 0.8 THz and all the other pairs of pump fields may have a greater frequency shift, preferably at or above 0.8 THz and below 1.8 THz.

In this way the proposed solution does not induce polarization dependent gain (PDG) in the co-pumped Raman amplifier. While being non-obvious, the proposed solution is essentially straightforward, as Raman pumps with polarization-combined pump light sources (diodes) already exist as such. On the market, however, a common wavelength is usually specified for the individual pump light sources combined in polarization. In accordance with the present invention, a different approach is proposed in order to devise a Raman amplifier which does neither induce intensity noise nor polarization dependent gain on optical signals to be amplified. Furthermore, the range of possible frequency shifts in accordance with the present invention, i.e., about 0.4 THz to 0.8 THz for FBG diodes, is wide enough to relax commercial constraints. In general, a lower limit of the shift of the center frequencies of the respective pump fields of each pair may be defined by 0.4 THz, thus sufficiently reducing the overlap between the pump fields.

It should be noted that although the proposed solution is described above with respect to a co-propagating geometry (cf. Fig. 1), it is equally applicable to counterpropagating geometries.

## Claims

1. A Raman amplifier (5) comprising a Raman active optical fiber (4a) and a Raman pump (7) in operative connection with said optical fiber (4a), the Raman pump (7) comprising:

   - a plurality of pairs of pump light sources (8.1a-c, 8.2a-c) emitting polarized pump light, each generating a pair of mutually orthogonal pump fields (E1 a-c, E2a-c) with respective central frequencies ($v_C$, $v_{C1}$, $v_{C2}$, $v_{1a-c}$, $v_{2a-c}$), and
   - a pump field combiner (9) in operative connection with the pump light sources (8.1a-c, 8.2a-c) and adapted to couple each of the plurality of pairs of pump fields (E1a-c, E2a-c) at mutually orthogonal directions of polarization into said optical fiber (4a),

   **characterized in that**
   the respective central frequencies ($v_{C1}$, $v_{C2}$) of the pump fields (E1 a-c, E2a-c) of at least one, preferably each pair of mutually orthogonal pump fields (E1a-c, E2a-c) are different from each other and exhibit a frequency shift ($\Delta v$, $\Delta v_a$, $\Delta v_b$) below 1.8 THz.

2. The Raman amplifier (5) according to claim 1, **characterized in that** the frequency shift ($\Delta v$) between the respective central frequencies ($v_{C1}$, $v_{C2}$) is lower than 0.8 THz.

3. The Raman amplifier (5) according to claim 1, **characterised in that** a spectral overlap between the orthogonal pump fields (E1 a-c, E2a-c) in the at least one, preferably each pair of pump fields (E1a-c, E2a-c) is limited by the relation:

$$(v_{C2} - \Delta v_2' / 2) - (v_{C1} + \Delta v_1' / 2) > 0 ,$$

   wherein $\Delta v_{1,2'}$ [$= \Delta v_{i'}$] is a frequency bandwidth of a respective pump field (E1a-c, E2a-c), such that:

$$\int_{v_c - \Delta v_i'/2}^{v_c + \Delta v_i'/2} P(v)\, dv = A \cdot \int_{-\infty}^{+\infty} P(v)\, dv$$

   for a given pump field (E1a-c, E2a-c), wherein $P(v)$ is an optical power spectrum of the pump field (E1a-c, E2a-c) and $A$ is a constant, $0.5 < A < 0.9$, preferably $A = 0.8$.

4. The Raman amplifier (5) according to claim 1, **characterized in that** the respective central frequencies ($v_{C1}$, $v_{C2}$) of only one pair of pump fields (E1a, E2a) with the lowest central frequencies ($v_{1a}$, $v_{2a}$) of pump fields (E1a, E2a) of said plurality of pairs of pump fields (E1 a-c, E2a-c) exhibit a frequency shift ($\Delta v$, $\Delta v_a$) below 1.8 THz, preferably below 0.8 THz.

5. The Raman amplifier (5) according to claim 1, **characterized in that** the plurality of pairs of pump light sources (8.1 a-c, 8.2a-c) are set up for emitting the polarized pump light through said Raman active optical fiber (4a) in a propagation direction of an optical signal (OS) to be amplified.

6. The Raman amplifier (5) according to claim 1, **characterized in that** the pump field combiner (9) comprises at least one of a polarization beam combiner (11.1-11.4), a wavelength multiplexer (10, 10a, 10b), and an optical coupler.

7. The Raman amplifier (5) according to claim 1, **characterized in that** at least one of the pump light sources (8.1, 8.2) is a Fiber Bragg Grating [FBG] diode.

8. The Raman amplifier (5) according to claim 1, **characterized in that** at least one of the pump light sources (8.1, 8.2) is an inner-grating module.

9. An optical transmission system (1), comprising:

   - a transmitter unit (2) for transmitting an optical signal (OS),
   - a receiver unit (3) for receiving the optical signal from the transmitter unit (2), and
   - an optical transmission link (4, 4a) for propagating the optical signal (OS) between the transmitter unit (2) and the receiver unit (3),

   **characterized by** a Raman amplifier (5) according to claim 1 in operative connection with the optical transmission link (4, 4a) for amplifying the optical signal (OS).

10. Method for amplifying an optical signal (OS) in a Raman active optical fiber (4a), comprising the steps of:

    (a) generating at least one pair of pump fields (E1a-c, E2a-c) with mutually orthogonal directions of polarization,
    (b) propagating said at least one pair of pump fields (E1a-c, E2a-c) through said Raman active optical fiber (4a) in a propagation direction of the optical signal (OS) to be amplified,
    **characterized by** the step of:
    (c) selecting the central frequencies ($v_C$, $v_{C1}$, $v_{C2}$, $v_{1a-c}$, $v_{2a-c}$) of the pump fields (E1 a-c, E2a-c) of said at least one pair of pump fields (E1 a-c, E2a-c) to be different from each other and to exhibit a frequency shift ($\Delta v$, $\Delta v_a$, $\Delta v_b$) of below 1.8 THz.

**Fig. 1**

**Fig. 1a**

**Fig. 1b**

Fig. 2

Fig. 3

Fig. 4

**Fig. 5a**

**Fig. 5b**

**Fig. 6a**

**Fig. 6b**

**Fig. 6c**

**European Patent Office**

**EUROPEAN SEARCH REPORT**

Application Number

EP 05 29 2459

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 6 344 922 B1 (GRUBB STEPHEN G ET AL) 5 February 2002 (2002-02-05) * column 4, line 7 - column 4, line 17 * * column 7, line 3 - column 7, line 21 * * column 7, line 43 - column 7, line 55; figure 3 * | 1-10 | H04B10/17 H01S3/30 |
| D,A | US 6 384 963 B2 (ACKERMAN DAVID ET AL) 7 May 2002 (2002-05-07) * abstract; figure 7 * | 1-10 | |
| A | US 2003/053192 A1 (ISLAM MOHAMMED N ET AL) 20 March 2003 (2003-03-20) * abstract; figures 3,11d * | 1-10 | |
| A | US 2002/105716 A1 (TANAKA TOSHIKI ET AL) 8 August 2002 (2002-08-08) * abstract; figures 5,6,17,18 * | 1-10 | |
| A | US 6 914 717 B1 (ISLAM MOHAMMED N) 5 July 2005 (2005-07-05) * abstract; figures 16a,16b * | 1-10 | TECHNICAL FIELDS SEARCHED (IPC) H04B H01S |

The present search report has been drawn up for all claims

| Place of search | Date of completion of the search | Examiner |
|---|---|---|
| Munich | 22 March 2006 | Phillips, S |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 05 29 2459

This annex lists the patent family members relating to the patent documents cited in the above-mentioned European search report.
The members are as contained in the European Patent Office EDP file on
The European Patent Office is in no way liable for these particulars which are merely given for the purpose of information.

22-03-2006

| Patent document cited in search report | | Publication date | Patent family member(s) | | Publication date |
|---|---|---|---|---|---|
| US 6344922 | B1 | 05-02-2002 | US | 6115174 A | 05-09-2000 |
| | | | US | 6377389 B1 | 23-04-2002 |
| | | | US | 6282002 B1 | 28-08-2001 |
| US 6384963 | B2 | 07-05-2002 | CA | 2335166 A1 | 03-09-2001 |
| | | | EP | 1130704 A2 | 05-09-2001 |
| | | | JP | 2001311973 A | 09-11-2001 |
| | | | US | 2001036004 A1 | 01-11-2001 |
| US 2003053192 | A1 | 20-03-2003 | NONE | | |
| US 2002105716 | A1 | 08-08-2002 | FR | 2820570 A1 | 09-08-2002 |
| | | | JP | 2002232362 A | 16-08-2002 |
| US 6914717 | B1 | 05-07-2005 | US | 2003053198 A1 | 20-03-2003 |
| | | | US | 2003058899 A1 | 27-03-2003 |

EPO FORM P0459

For more details about this annex : see Official Journal of the European Patent Office, No. 12/82

**EP 1 788 728 A1**

**REFERENCES CITED IN THE DESCRIPTION**

**Patent documents cited in the description**

- US 6384963 B